# EUROPEAN PATENT APPLICATION

(11) **EP 3 462 744 A1**
(43) Date of publication of application: **03.04.2019**
(21) Application number: 17306287.8
(22) Date of filing: 28.09.2017
(51) Int. Cl.: H04N 19/96, H04N 19/192, H04N 19/176, H04N 19/119, H04N 19/147, H04N 19/194

(54) **METHOD AND APPARATUS FOR ENCODING A PICTURE BLOCK**

(71) Applicant: Thomson Licensing, 92130 Issy-les-Moulineaux (FR)
(72) Inventor: ROBERT, Antoine, 35576 Cesson-Sévigné Cedex (FR); LELEANNEC, Fabrice, 35576 Cesson-Sévigné Cedex (FR); URBAN, Fabrice, 35576 Cesson-Sévigné Cedex (FR)
(74) Representative: Huchet, Anne

(57) **Abstract**

An encoding method is disclosed. A partitioning of a current block of a picture into sub-blocks is determined in the form of a coding tree using a set of coding parameters, wherein at least one coding parameter of the set of coding parameters is set to a value belonging to a subset of all possible values. Then, values of the coding parameters of the set are determined from the determining of the partitioning. Finally, the current block is encoded using the determined coding parameters.

## Description

### 1. TECHNICAL FIELD

The present embodiments generally relate to a method and a device for picture encoding, and more particularly, to a method and a device for picture encoding and decoding that uses coding tree based partitioning.

### 2. BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. During encoding the original image block is usually partitioned/split into sub-blocks possibly using quad-tree partitioning. To reconstruct the video, the compressed data is decoded by inverse processes corresponding to the prediction, transform, quantization and entropy coding.

### 3. BRIEF SUMMARY

An encoding method is disclosed that comprises:
- determining a partitioning of a current block of a picture into sub-blocks in the form of a coding tree using a set of coding parameters, wherein at least one coding parameter of the set of coding parameters is set to a value belonging to a subset of all possible values;
- determining values of the coding parameters of the set from the determining of a partitioning; and
- encoding the current block using the determined coding parameters.

An encoding apparatus is also disclosed that comprises:
- means for determining a partitioning of a current block of a picture into sub-blocks in the form of a coding tree using a set of coding parameters, wherein at least one coding parameter of the set of coding parameters is set to a value belonging to a subset of all possible values;
- means for determining values of the coding parameters of the set from the determining of a partitioning; and
- means for encoding the current block using the determined coding parameters.

In a variant, an encoding apparatus is disclosed that comprises a communication interface configured to access a picture part and at least one processor configured to:
- determine a partitioning of a current block of a picture into sub-blocks in the form of a coding tree using a set of coding parameters, wherein at least one coding parameter of the set of coding parameters is set to a value belonging to a subset of all possible values;
- determine values of the coding parameters of the set from the determining of a partitioning; and
- encode the current block using the determined coding parameters.

A computer program or a medium storing such a computer program is disclosed, wherein the computer program comprises software code instructions for performing the encoding method when the computer program is executed by a processor.

The following embodiments apply to the encoding method, encoding apparatus and computer program disclosed above.

Advantageously, determining values of the coding parameters of the set from the determining a partitioning comprises determining values of the coding parameters of the set using the determined coding tree and wherein encoding the current block comprises encoding the current block using the determined coding tree and the determined coding parameters.

In an embodiment, determining values of the coding parameters of the set using the determined coding tree comprises using the determined coding tree only up to a determined depth level in the coding tree.

In a variant, determining values of the coding parameters of the set using the determined coding tree comprises using the determined coding tree down to a determined block size.

In an embodiment, the at least one coding parameter of the set of coding parameters is set to a value belonging to a subset of all possible values only up to a determined depth level in the coding tree.

In a variant, the at least one coding parameter of the set of coding parameters is set to a value belonging to a subset of all possible values only down to a determined block size.

In another variant, the at least one coding parameter of the set of coding parameters is set to a value belonging to a subset of all possible values only from a determined depth level in the coding tree up to a higher depth level.

In yet another variant, the at least one coding parameter of the set of coding parameters is set to a value belonging to a subset of all possible values only from a determined block size down to a smaller block size.

In another embodiment, a partitioning of a current block into sub-blocks in the form of a coding tree using a set coding parameters comprises estimating a rate distortion cost per split mode for each sub-block in the coding tree and storing, for each sub-block, M split modes whose associated rate distortion costs are the lowest, M being an integer.

Advantageously, determining values of the coding parameters of the set from the determining a partitioning comprises determining values of the coding parameters of the set and further a new coding tree using the stored M split modes for each sub-block and wherein encoding the current block comprises encoding the current block using the new coding tree and the determined coding parameters.

According to a specific characteristic, M is a function of a depth level of the sub-block in the coding tree or of a size of the sub-block.

### 4. BRIEF SUMMARY OF THE DRAWINGS

- Figure 1 represents a partitioning of a coding tree unit (CTU) into coding units (CUs) where coding units can be split both according to quad-tree and symmetric split modes;
- Figure 2 represents the coding tree associated with the CTU splitting of Figure 1;
- Figure 3 depicts the split modes used in Figure 1;
- Figure 4 depicts additional asymmetric split modes;
- Figure 5 represents a flowchart of a method for determining a coding tree and associated coding parameters for a block, e.g. a CTU, to be encoded according to a specific and non-limiting embodiment;
- Figure 6 represents a detailed flowchart of a step of the method illustrated by figure 5 according to a specific and non-limiting embodiment to be applied to an intra CU;
- Figure 7 represents an exemplary architecture of a transmitter configured to encode a picture in a bitstream according to a specific and non-limiting embodiment;
- Figure 8 illustrates an exemplary video encoder adapted to execute the encoding method;
- Figure 9 represents a flowchart of a method for encoding a block of a picture in a bitstream according to a specific and non-limiting embodiment;
- Figure 10 represents a block split into sub-block and indicate for each sub-block its depth level in the coding tree; and
- Figures 11-13 represents flowcharts of a method for encoding a block of a picture in a bitstream according to specific and non-limiting embodiments.

### 5. DETAILED DESCRIPTION

A picture is an array of luma samples in monochrome format or an array of luma samples and two corresponding arrays of chroma samples in 4:2:0, 4:2:2, and 4:4:4 colour format. Generally, a "block" addresses a specific area in a sample array (e.g., luma Y), and a "unit" includes the collocated blocks of all color components (luma Y and possibly chroma Cb and chroma Cr). A slice is an integer number of basic coding units such as HEVC coding tree units or H.264 macroblock units. A slice may consist of a complete picture as well as part thereof. Each slice may include one or more slice segments.

In the following, the word "reconstructed" and "decoded" may be used interchangeably. Usually but not necessarily "reconstructed" is used on the encoder side while "decoded" is used on the decoder side. It should be noted that the term "decoded" or "reconstructed" may mean that a bitstream is partially "decoded" or "reconstructed," for example, the signals obtained after deblocking filtering but before filtering, and the reconstructed samples may be different from the final decoded output that is used for display. We may also use the terms "image," "picture," and "frame" interchangeably.

Various embodiments are described with respect to the HEVC standard. However, the present embodiments are not limited to HEVC, and can be applied to other standards, recommendations, and extensions thereof, including for example HEVC or HEVC extensions like Format Range (RExt), Scalability (SHVC), Multi-View (MV-HEVC) Extensions and H.266. The various embodiments are described with respect to the encoding/decoding of a slice. They may be applied to encode/decode a whole picture or a whole sequence of pictures.

In HEVC coding, a picture is partitioned/split into coding tree units (CTU) of square shape with a configurable size typically 64x64, 128x128, or 256x256. In the following, the terms "partition" and "split" are used interchangeably. A CTU is the root of a quad-tree partitioning into Coding Units (CU). A CTU may be considered as a CU of largest size and is thus sometimes referred to as LCU (Largest Coding Unit). A quad-tree is a tree in which a parent node can be split into four child nodes, each of which may become parent node for another split into four child nodes. In more recent encoding systems, a CTU is considered as the root of a coding tree partitioning into Coding Units (CU). A coding tree is a tree in which a parent node (usually corresponding to a CU) can be split into child nodes (e.g. into 2, 3 or 4 child nodes), each of which may become parent node for another split into child nodes. The coding tree has a unique root node, e.g. a CTU. A leaf of the coding tree is a terminating node of the tree. Each node of the coding tree represents a CU that may be further split into smaller CUs also named sub-CUs. Once the partitioning of a CTU into CUs is determined, CUs corresponding to the leaves of the coding tree are encoded.

The partitioning of a CTU into CUs and the coding parameters used for encoding each CU (corresponding to a leaf of the coding tree) may be determined on the encoder side through a rate distortion optimization procedure, which consists in jointly determining the coding tree representation of the CTU and coding parameters for CUs in the CTU with minimal rate distortion cost or low rate distortion cost, i.e. lower than a given value.

The number of split modes used for partitioning a CTU into CUs and the number of coding parameters (e.g. prediction information, for instance motion information, spatial intra prediction, etc) used for encoding the CUs that are to be evaluated on the encoder side may be high and therefore impacts the computational complexity at the encoder side. Indeed, while in HEVC the number of split modes is limited because of the quad-tree based partitioning, new split modes were defined recently that increase the total number of possible split modes.

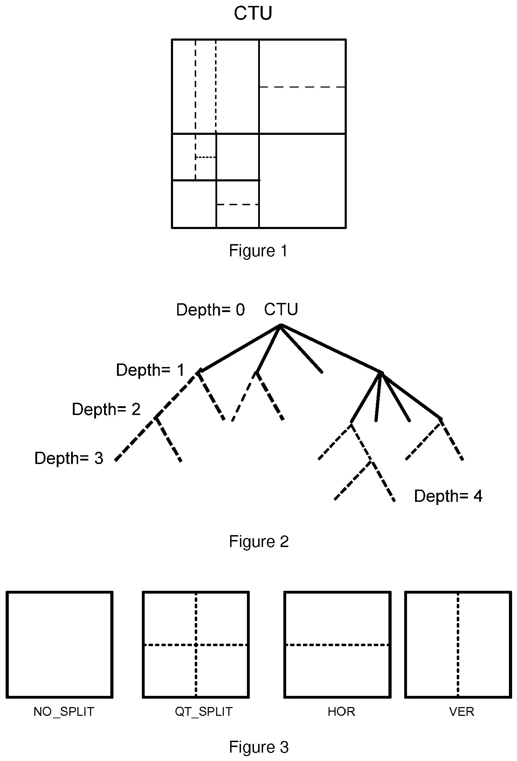

Symmetric split modes were defined to allow a CU to be split horizontally or vertically into two coding units of equal size. **Figure 1** represents a partitioning of a CTU into CUs where coding units can be split both according to quad-tree and symmetric split modes. **Figure 2** represents the associated coding tree. On **Figure 1** solid lines indicate quad-tree partitioning and dotted lines indicate binary splitting of a CU into symmetric CUs. On Figure 2, solid lines represent the quad-tree splitting and dotted lines represent the binary splitting that is spatially embedded in the quad-tree leaves. **Figure 3** depicts the 4 split modes used in Figure 1. The mode NO_SPLIT indicates that the CU is not further split. The mode QT_SPLIT indicates that the CU is split into 4 quadrants according to a quad-tree, the quadrants being separated by two split lines. The mode HOR indicates that the CU is split horizontally into two CUs of equal size separated by one split line. VER indicates that the CU is split vertically into two CUs of equal size separated by one split line. The split lines are represented by dashed lines on Figure 3.

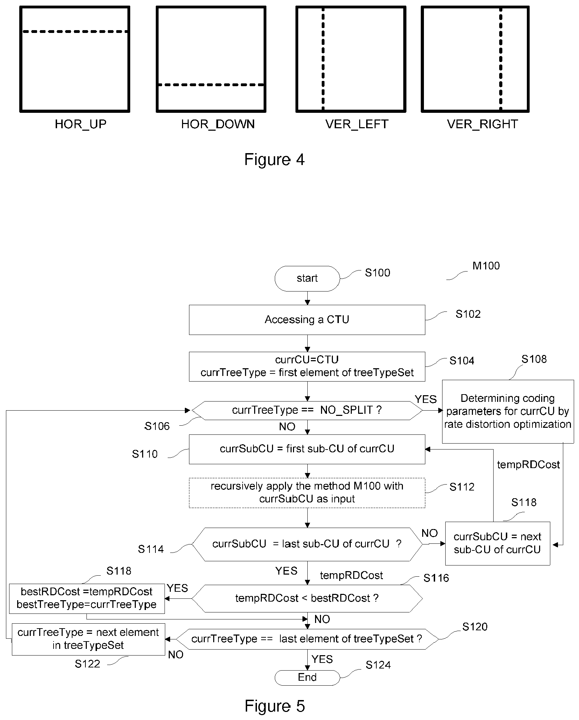

Asymmetric split modes were defined to allow a CU to be split horizontally into two coding units with respective rectangular sizes (w,h/4) and (w,3h/4) or vertically into two coding units with respective rectangular sizes (w/4,h) and (3w/4,h)) as depicted on **Figure 4****.** The two coding units are separated by one split line represented by dashed line on Figure 4.

**Figure 5** represents a flowchart of a method for determining a coding tree and associated coding parameters for a block, e.g. a CTU, to be encoded according to a specific and non-limiting embodiment.

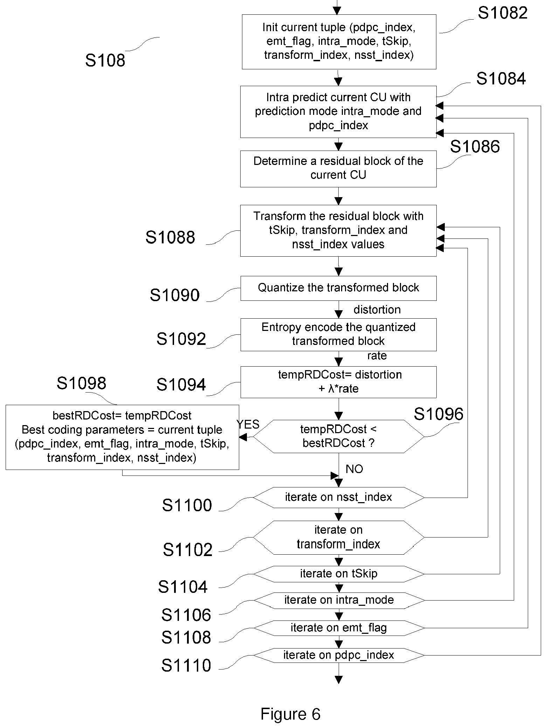

The method M100 starts at step S100. A variable bestRDCost is initialized with a very high value, e.g. 10²⁵. treeTypeSet is a set of candidate split modes. As an example, treeTypeSet ={NO_SPLIT, HOR, VER, HOR_UP, HOR_DOWN, VER_LEFT, VER_RIGHT, QT_SPLIT}. The treeTypeSet may include additional split modes. At step S102, the method accesses a CTU. At step S104, currCU is set to the accessed CTU and currTreeType is set to the first element of the treeTypeSet. At step S106, the method checks whether currTreeType is equal to NO_SPLIT. In the case where, currTreeType = NO_SPLIT, the method continues at step S108, otherwise currCU is split into at least two sub-CUs and the method continues at step S110. At step S108, coding parameters are determined for currCU by rate distortion optimization. The determined coding parameters are associated with a rate distortion cost tempRDCost. A specific embodiment of S108 is detailed on Figure 6. At step S110, currSubCU is set to the first sub-CU of currCU obtained by splitting currCU according to currTreeType. At step S112, the method M 100 is invoked in a recursive way with currSubCU as input. At step S114, the method checks whether currSubCU is the last sub-CU of currCu obtained by splitting currCU according to currTreeType. If it is the case, the method continues at step S116, otherwise the method continues at step S118 with a next sub-CU of currCU.
The method thus loops over each sub-CU of currCU obtained when splitting currCU according to currTreeType.
Once the loop over the sub-CUs is done, the rate distortion cost tempRDCost associated with currCu when using the current split mode currTreeType is obtained. It is the sum of the rate distortion cost associated with each sub-CU and of the coding cost of the signaling, i.e. the number of bits used for signaling, of the current split mode currTreeType. A rate distortion cost is usually defined as a weighted sum of a distortion D and of a rate (namely a coding cost) R. As an example, RDCost= D+ λ*R, where λ is a Lagrangian multiplier. At step S116, the rate distortion cost tempRDCost is compared to the lowest rate distortion cost obatined so far bestRDCost. In the case where tempRDCost < bestRDCost, the method continues at step S118, otherwise the method continues at step S120. At step S118, bestRDCost is set equal to tempRDCost and bestTreeType is set equal to currTreeType.
At step S120, the method checks whether currTreeType is the last element of treeTypeSet. In the case where currTreeType is the last element of treeTypeSet, the method ends at step S124, otherwise the method continues at step S122 with a next element of treeTypeSet.

**Figure 6** represents a detailed flowchart of the step S108 according to a specific and non-limiting embodiment to be applied to an intra CU. It involves a series of multiple embedded loops, each loop consisting in iterating over all possible values for each coding parameter involved in the intra prediction and residual transform of the considered CU.
The coding parameters are for example the following ones:
- PDPC index (pdpc_index) is an index identifying an intra prediction method of a coding block; PDPC stands for Position Dependent Predictor Combination. It includes several ways to generate the intra prediction;
- EMT (Enhanced Multicore Transforms) flag (emt_flag) is a flag, i.e. a binary index, that indicates that a transform different from usual DCT (Discrete Cosine Transform) is used for the current CU.
- transform index (transform_index) is encoded/decoded in the case where the flag emt_flag is equal to true or 1. It is an index identifying a transform among several candidates transforms that can be applied to a coding block;
- Intra prediction mode index (intra_mode) is an index identifying an intra prediction mode used for predicting a coding block and selected from a set intraModeSet that comprises DC, Planar, and all intra directional modes.
- tSkip flag is a flag indicating whether a transform is applied or not on the coding blokc, e.g. tSkip = 1 if no transform applied to the block and tSkip = 0 otherwise;
- NSST index (nsst_index) is an index indicating the Non-Separable Secondary Transform. A NSST is a transform that applies onto transformed coefficient before quantization on the encoder side. The secondary transform is a linear, reversible isometry that applies onto the 8x8 upper-left subset of transform of a given CU if the CU size is at least 8 in width and height. If the CU size if lower than 8 in width or height, then the NSST applies onto the 4x4 upper-left subset of transform coefficients. The NSST transform is reversible and keep the norm of the transform. On the decoder side, the inverse NSST applies after inverse quantization and before inverse transform.
The step S108 begins at step S1082 by initializing the coding parameters, i.e. a tuple of coding parameters is initialized. To this aim, each coding parameter in the tuple is given an initial value. At step S1084, the current CU currCU is intra predicted with the prediction mode defined by the coding parameter intra_mode and pdpc_index to obtain a predictor.
At step S1086, a residual block of the current CU is determined. To this aim, the predictor obtained at step S1084 is subtracted from the current CU.
At step S1088, the residual block is transformed using the coding parameters tSkip, transform_index and nsst_index to obtain a transformed block. The transformed block comprises transform coefficients. At step S1090, the transformed block is quantized. A distortion value may be determined by comparing the current CU with its reconstructed version. The reconstructed version is obtained by inverse quantizing the quantized transformed block, inverse transforming and further adding the predictor.
At step S1092, the quantized transformed block obtained at step S1090 is entropy coded. A coding cost (a number of bits) of the current CU, denoted rate, may be determined. At step S1094, a RD cost denoted tempRDCost is obtained: tempRDCost =distortion + λ* rate. At step S1096, the RD cost tempRDCost is compared to bestRDCost. In the case where tempRDCost< bestRDCost, at step S1098, bestRDCost is set equal to tempRDCost and the best values of the coding parameters are set equal to the values of the current tuple. The method then loops over the coding parameters values at steps S1100 to S1110. In particular, the steps S1084 to S1098 are repeated with a new tuple.
The step S108 ends at step S1080.

The rate distortion search involves, for each tuple of multiple coding parameters, the prediction, quantization, transform, distortion and rate cost computation for the current CU. Each time, the method iterates on a current coding parameter, all the coding parameters whose loop is embedded inside the current loop, i.e. the loop associated with the current coding parameter, are reset to their first possible value.

The same principles disclosed with respect to Figure 6 for an intra coded current CU, i.e. looping over the coding parameter values, may be applied to an inter coded current CU. The coding mode for an inter CU also includes some iterative search for each possible inter coding mode. This takes the form of successive loops as for intra coding. Basically, these INTER coding modes consist in several ways to perform the motion compensated temporal prediction of the considered CU, e.g. Intra, AMVP, FRUC (Frame-Rate Up-Conversion, also called Pattern matched motion vector derivation), Affine and Merge modes.

The rate distortion optimization based method M100 involves a recursive depth-first tree search process whose number of combinations highly depends on the number of candidate split modes evaluated at each stage (node) of the coding tree search process.

Moreover, in case of the NO_SPLIT split mode, the rate distortion step S108 determines the set of optimal coding parameters for the compression of the considered coding unit. This CU-level rate distortion optimization step involves a high number of embedded loops over all candidate coding parameters as depicted on Figure 6 for an intra CU.

There is thus a need of an encoding method that allows fast decision of the coding tree representation of a CTU and of the coding parameters of each CU of this coding tree.

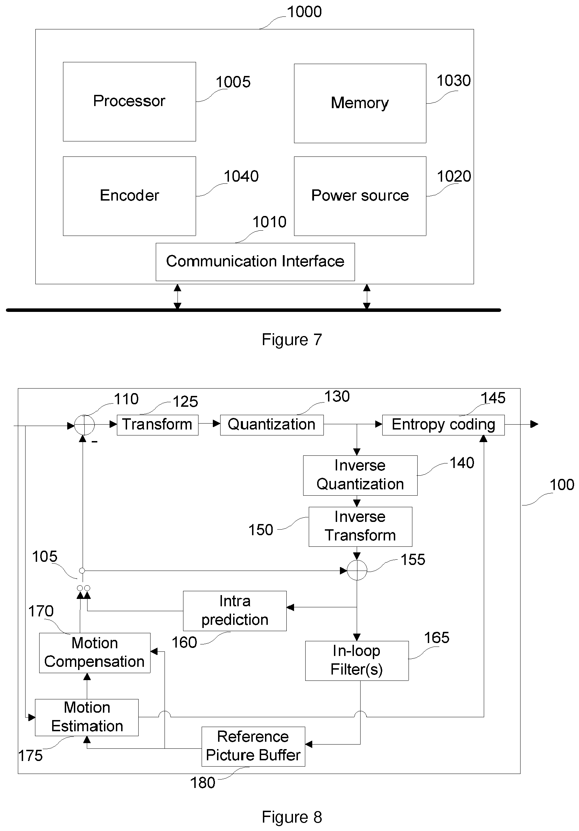

**Figure 7** represents an exemplary architecture of a transmitter 1000 configured to encode a picture in a bitstream according to a specific and non-limiting embodiment.

The transmitter 1000 comprises one or more processor(s) 1005, which could comprise, for example, a CPU, a GPU and/or a DSP (English acronym of Digital Signal Processor), along with internal memory 1030 (e.g. RAM, ROM, and/or EPROM). The transmitter 1000 comprises one or more communication interface(s) 1010 (e.g. a keyboard, a mouse, a touchpad, a webcam), each adapted to display output information and/or allow a user to enter commands and/or data; and a power source 1020 which may be external to the transmitter 1000. The transmitter 1000 may also comprise one or more network interface(s) (not shown). Encoder module 1040 represents the module that may be included in a device to perform the coding functions. Additionally, encoder module 1040 may be implemented as a separate element of the transmitter 1000 or may be incorporated within processor(s) 1005 as a combination of hardware and software as known to those skilled in the art.
The picture may be obtained from a source. According to different embodiments, the source can be, but is not limited to:
- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).
According to different embodiments, the bitstream may be sent to a destination. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network. According to an exemplary and non-limiting embodiment, the transmitter 1000 further comprises a computer program stored in the memory 1030. The computer program comprises instructions which, when executed by the transmitter 1000, in particular by the processor 1005, enable the transmitter 1000 to execute the encoding method described with reference to Figures 5, 6, 9, 11, 12 and/or 13. According to a variant, the computer program is stored externally to the transmitter 1000 on a non-transitory digital data support, e.g. on an external storage medium such as a HDD, CD-ROM, DVD, a read-only and/or DVD drive and/or a DVD Read/Write drive, all known in the art. The transmitter 1000 thus comprises a mechanism to read the computer program. Further, the transmitter 1000 could access one or more Universal Serial Bus (USB)-type storage devices (e.g., "memory sticks.") through corresponding USB ports (not shown). According to exemplary and non-limiting embodiments, the transmitter 1000 can be, but is not limited to:
- a mobile device;
- a communication device;
- a game device;
- a tablet (or tablet computer);
- a laptop;
- a still picture camera;
- a video camera;
- an encoding chip or encoding device/apparatus;
- a still picture server; and
- a video server (e.g. a broadcast server, a video-on-demand server or a web server).

**Figure 8** illustrates an exemplary video encoder 100, e.g. of HEVC type, adapted to execute the encoding method according to any embodiment disclosed with respect to figures 5, 6, 9, 11, 12 and/or 13. The encoder 100 is an example of a transmitter 1000 or part of such a transmitter 1000.

For coding, a picture is usually partitioned into basic coding units, e.g. into coding tree units (CTU) in HEVC or into macroblock units in H.264.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision. Residuals are calculated by subtracting (110) a predicted sample block (also known as a predictor) from the original picture block. CUs in intra mode are predicted from reconstructed neighboring samples within the same slice. A set of 35 intra prediction modes is available in HEVC, including a DC, a planar and 33 angular prediction modes. The applicable luma intra prediction mode for the current block is encoded in the bitstream.

For an inter CU, motion information is encoded. In HEVC, the motion information (i.e., motion vector and reference index) can be signaled by two methods, namely, "advanced motion vector prediction (AMVP)" and "merge mode". In AMVP, a video encoder or decoder assembles candidate lists based on motion vectors determined from already coded blocks. The video encoder then signals an index into the candidate lists to identify a motion vector predictor (MVP) and signals a motion vector difference (MVD). At the decoder side, the motion vector (MV) is reconstructed as MVP+MVD.

In the merge mode, a video encoder or decoder assembles a candidate list based on already coded blocks, and the video encoder signals an index for one of the candidates in the candidate list. At the decoder side, the motion vector and the reference picture index are reconstructed based on the signaled candidate.

The residuals are transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder comprises a decoding loop and thus decodes an encoded block to provide a reference for further predictions. The quantized transform coefficients are de-quantized (140) and inverse transformed (150) to decode residuals. A picture block is reconstructed by combining (155) the decoded residuals and the predicted sample block. An in-loop filter (165) is applied to the reconstructed picture, for example, to perform deblocking/SAO (Sample Adaptive Offset) filtering to reduce coding artifacts. The filtered picture may be stored in a reference picture buffer (180) and used as reference for other pictures.

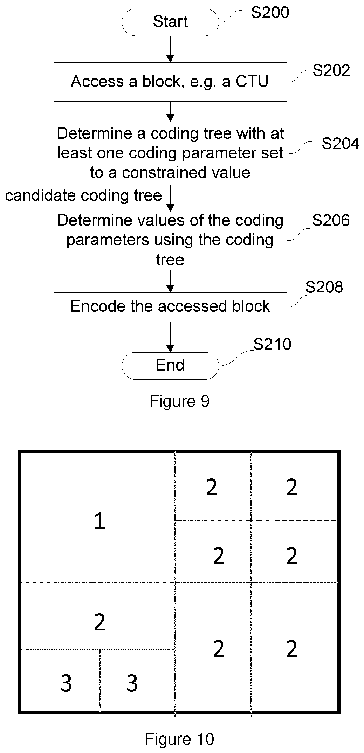

**Figure 9** represents a flowchart of a method for encoding a block of a picture in a bitstream according to a specific and non-limiting embodiment.

The method starts at step S200. At step S202, a transmitter 1000, e.g. such as the encoder 100, accesses a block of a picture, e.g. a CTU. At step S204, the transmitter 1000 determines a partitioning of the accessed block into sub-blocks in the form of a coding tree using a set of coding parameters, wherein at least one coding parameter of said set is set to a value belonging to a subset of all possible values for said coding parameter. The coding parameter is said to be set to a constrained value. As an example, for a coding parameter taking the following possible values : {0; 1; 2; 3; 4; 5}, in step S204, the coding parameter is set to a value of the subset {0; 1; 2}. Said otherwise, in step S204 some values of the coding parameters are forbidden, e.g. the values 4 and 5 in the previous example. In a variant, the at least one coding parameter is set to a default value, e.g. a value 0.
In step S204, constraints on coding parameters values are thus introduced, i.e. some possible values of coding parameters are forbidden. The set of coding parameters is said to be constrained, i.e. restrictions on coding parameters values are applied. To this aim, at step S204 the method M100 is applied with at least one coding parameter set to a value belonging to a set of values limited with respect to the whole set of possible values that may be used for this coding parameter. The set of coding parameters may comprise in the case of intra coding the following coding parameters: PDPC index, EMT flag, transform index, Intra prediction mode, tSkip flag, NSST index, etc. This list of coding parameters is not exhaustive. As an example, the coding parameter transform index may be set to a default value 0 to indicate that the transform is necessarily a DCT. In the case of inter coding it may consist in setting EMT flag to false, FRUC flag to false, Affine flag to false. By constraining some coding parameters to take specific values, the number of loops in step S108 is decreased. The step S204 is thus significantly faster than when applying a full rate distortion search in the candidate coding tree leaves, during the recursive coding tree search
The coding tree or a part of it obtained at step S204 is used during a step S206 for determining values of the coding parameters of the set to be used for encoding the CTU. The coding parameters for a CU are obtained by applying step S108. In the case where the coding tree obtained by S204 is used completely in S206, the step S108 is applied on the CUs corresponding to the leaves of the coding tree. The constraints applied during step S204 on the coding parameter values are released. The set of coding parameters is said to be unconstrained, i.e. no restriction on coding parameters values is applied. As an example, the coding parameter transform index may take any of its possible values, i.e. not only 0. The step S206 comprises determining values of coding parameters for each CU that corresponds to a leaf of the coding tree determined at step S204. Since the coding tree determined at S204 is kept at least partly unchanged during S206, no rate distortion competition or limited rate distortion competition between the various split modes takes place during S206. In a first embodiment, all coding parameters values obtained in step S204 are discarded. In a variant, some of them are kept and thus not determined again in step S206, e.g. the intra prediction mode.
At step S208, the accessed block is encoded in a bitstream by taking into account the partitioning of the block defined by the coding tree obtained by step S204 and the coding parameters values obtained by step S206. Encoding a block usually but not necessarily comprises subtracting a predictor from the block to obtain a block of residuals, transforming the block of residuals into a block of transform coefficients, quantizing the block of coefficients with a quantization step size QP to obtain a quantized block of transform coefficients and entropy coding the quantized block of transform coefficients in the precedes. Thus, the quantized coefficients may be stored during the rate bitstream. A part of these operations may take place during the rate distortion optimization process of S206 that distortion optimization process and re-used during step S208. In a specific embodiment, step S208 may only comprise the entropy coding of the quantized block of transform coefficients.
The method ends at step S210.
Advantageously, the coding tree is determined in a first step with constrained coding parameters, i.e. a constrained set of coding parameters, and coding parameters to be used for encoding are determined in a second step with the coding tree of the first step.

In a coding tree, each node representing a CU has an associated depth level as indicated on Figures 2 and 10. **Figure 10** indicates for each CU of a CTU its depth level. The top left CU is obtained after the first split of the CTU in 4 CUs, thus its depth level is equal to 1. The 4 top right CUs are obtained after two successive splits, thus their depth level is equal to 2.
In an embodiment, during S204, some coding parameters are constrained up to a given depth level D in the coding tree. According to an alternative, during S204, some coding parameters are constrained down to a given block size S in the coding tree. The block size may be defined as the product of the block width and the block height for example. Indeed, the topology of big CUs is likely not to depend on several coding parameters, because the spatial division of big blocks is mainly influenced by the structure contained in the original signal to encode. On the contrary, with respect to small CUs, the choice of the topology is much more interacting with the coding parameters used to encode the tree leaves, i.e. the non-split CUs.
According to a further embodiment, during S204, some coding parameters are not constrained until a certain depth level D, and are constrained for larger depth levels. As an alternative, during S204, some coding parameters are not constrained down to a given block size, and are constrained for smaller CUs, i.e. CUs whose size is smaller than the given block size.
In one embodiment, the coding tree of S204 is used in step S206 only up to a given depth level D in the coding tree representation. The goal here is to freeze the topology of big CUs (i.e. blocks at lower depth level) in the CTU, while keeping some freedom in the choice of topology for smaller CUs. In this case, the full recursive search method M100 is used in step S206 for CUs whose depth level is higher than D.
In an alternative, the coding tree of S204 is used in step S206 down to a given block size S, in the coding tree representation. The block size is defined as the product of the block width by the block height for example. In other words, the coding tree of S204 is kept unchanged in S206 for all blocks whose size higher than S.
The above embodiments may be combined for different coding parameters.

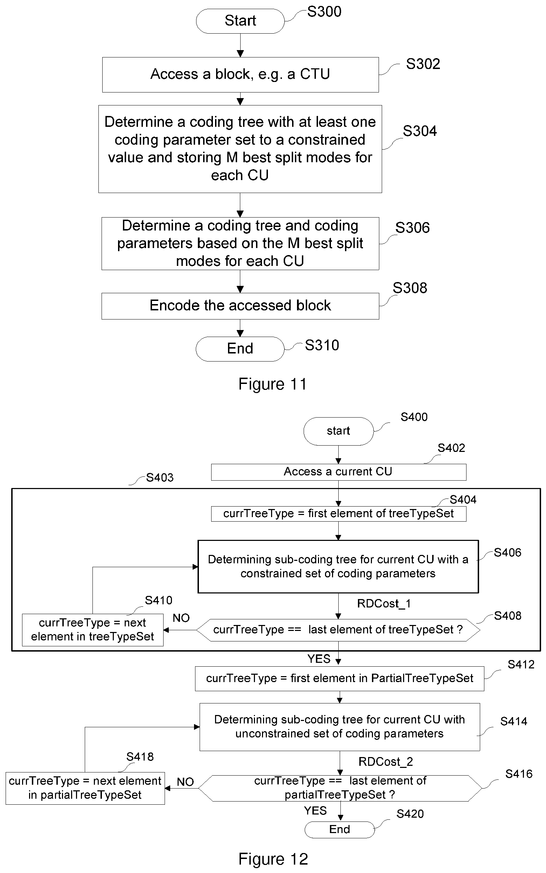

**Figure 11** represents a flowchart of a method for encoding a block of a picture in a bitstream according to a specific and non-limiting embodiment.

The method starts at step S300. At step S302, a transmitter 1000, e.g. such as the encoder 100, accesses a block of a picture, e.g. a CTU. At step S304, the transmitter 1000 determines a partitioning of the accessed block into sub-blocks in the form of a coding tree using a set of coding parameters, wherein at least one coding parameter in said set is set to a value that belongs to a subset of all possible values. The step S304 is identical to step S204 except that at each node of the coding tree, the M best evaluated split modes (i.e. with lower rate distortion cost) are stored in a memory. This stored information is re-used in the step S306. At step S306, the method M100 is applied to determine both the coding tree and the coding parameters values. Therefore, the coding tree obtained at step S304 is discarded. The coding tree is no more frozen in step S306 as it was in S206. However, the rate distortion competition between split modes of a CU is constrained since not all split modes are allowed for a given CU. To this aim, during the rate distortion choice of the best split mode of a CU, only the M best split modes that were found during S304 are being evaluated. Other split modes are discarded for the rate distortion competition. M is an integer, typically equal to 1, 2 or 3. This way, a limited degree of freedom is maintained during S306. Therefore, the coding tree coding parameters are obtained faster.

The advantage of this embodiment compared to the embodiment of figure 9 is a better overall compression efficiency, since more split modes are evaluated for the final rate distortion optimization of the CTU. However, this increased compression performance comes with an increased processing time.

According to an embodiment, the parameter M, i.e. the number of split modes considered as candidates for a CU during S304, is a function of the depth level. Typically, a higher value (e.g. 3) of M is used for larger depth levels, while a smaller value of M is used for lower depth levels that corresponds to larger blocks.

As an alternative, the parameter M depends on the block size. For example, a higher value (e.g. 3) of M is used for CUs of small size, while a smaller value of M is used for larger blocks.

The same embodiments and variant mentioned for the method of figure 9 also apply to the method of figure 11. The embodiment of Figure 9 is a particular version of the embodiment of Figure 11 with M=1.

The step S308 is identical to S208. The method ends at step S310.

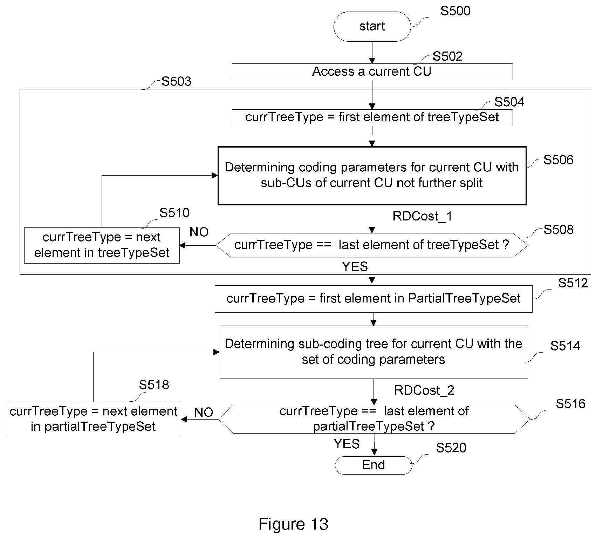

In the embodiments disclosed with respect to figures 9 and 11, the two-stages search process is performed on the CTU level. In the following embodiments disclosed with respect to Figures 12 and 13, the two-stages search process is performed on a CU level inside the coding tree search of Figure 5. According to these embodiments, the two-stages search process is applied in order to reduce the number of split modes that are tested during the rate distortion optimization for a given CU. To this aim, the methods according to both embodiments comprise a step S403 (respectively S503) for determining a sub-set partialTreeTypeSet of split modes to be tested during the rate distortion optimization for a given CU.

**Figure 12** represents a flowchart of a method for encoding a block of a picture in a bitstream according to a specific and non-limiting embodiment.

For each CU considered during the coding tree search, some split modes to be checked during the full rate distortion optimization are pre-selected in a step S403.

All or a part of the candidate split modes undergo a fast first tree search stage S403, which leads to a stored RD cost RdCost_1 [currTreeType] for each candidate split mode currTreeType of treeTypeSet. Once this loop over the candidate split modes is done, N best split modes are further considered as candidates for a full rate distortion optimization. N is an integer, typically equal to 2, 3 or 4. N is lower than the number of split modes in treeTypeSet. Thus, a second loop over the N best split modes is performed, and for each of these split modes, a second tree search stage is involved. This second stage may consist in a full RD search.

The method starts at step S400. At step S402, a transmitter 1000, e.g. such as the encoder 100, accesses a current coding unit.
At step S404, currTreeType is set to the first element of the treeTypeSet. At step S406, a sub-coding tree is determined for current CU by rate distortion optimization using a constrained set of coding parameters, i.e. with at least one coding parameter that is set equal to a value belonging to a subset of all possible values for this coding parameter. Step S406 outputs a RD cost RdCost_1[currTreeType] that is associated with the split mode currTreeType. At step S408, the method checks whether currTreeType is the last element of treeTypeSet. In the case where currTreeType is the last element of treeTypeSet, the method continues at step S412, otherwise the method continues at step S410 with a next element of treeTypeSet. At step S412, currTreeType is set to the first element of a partialTreeTypeSet which comprises the N split modes of TreeTypeSet whose associated RD costs RdCost_1[currTreeType] are the lowest.
At step S414, a sub-coding tree is determined for current CU by rate distortion optimization using an unconstrained set of coding parameters, i.e. the constraints applied during step S406 on the coding parameter values are released. Step S414 outputs a rate distortion cost RdCost_2[currTreeType] that is associated with the split mode currTreeType. At step S416, the method checks whether currTreeType is the last element of partialTreeTypeSet. In the case where currTreeType is the last element of partialTreeTypeSet, the method ends at step S420, otherwise the method continues at step S418 with a next element of partialTreeTypeSet. The method thus outputs for the current CU the best split mode which is the mode in partialTreeTypeSet associated with the lowest RdCost_2[currTreeType].
If a split mode different from NO_SPLIT is contained in the set partialTreeTypeSet, then the step S414 includes, for this candidate split mode, the division of the current CU into 2 or more sub-CUs. The process of figure 12 is then invoked in a recursive way successively with each sub-CU of the current CU as input.
If the split mode NO_SPLIT is contained in the set partialTreeTypeSet, then the step S414 includes, for this NO_SPLIT mode, a rate distortion optimization of the coding parameters associated with the current CU. Furthermore, if the NO_SPLIT mode is the best split mode for the current CU, that it to say the split mode in the set partialTreeTypeSet with minimal rate distortion cost RdCost_2, then the optimal coding parameters found for the current CU are stored and represent the final coding parameters that are used to encode the current CU.
The method according to this embodiment reduces the coding time compared to the method disclosed with respect to figure 5. Indeed, the first coding tree search stage is much faster than a full search. In addition, the full search only takes place for a reduced number of split modes, namely the ones pre-selected.

According to a specific embodiment, the second tree search stage is not a full search but is constrained. The N best found split modes found during the first tree search stage are considered as split mode candidates of each sub-CU during the constrained recursive tree search process.

According to another embodiment, only a subset of split mode candidates undergoes the two-stages tree search process. The other split mode candidates systematically undergo the one stage tree search process of figure 5.

For instance, the split mode candidates that undergo the two-stage process may be the asymmetric split modes (HOR_TOP, HOR_DOW, VER_LEFT, VER_RIGHT), in order to only perform the full RD search for a subset of these asymmetric split modes.

According to an embodiment, the two-stage tree search of Figure 12 only takes place at some depth levels. For instance, it may take place only for low depth levels.

In a variant, the two-stage tree search of Figure 12 only takes place for some block sizes. For instance, it may take place only for large block, hence for large block sizes.

**Figure 13** represents a flowchart of a method for encoding a block of a picture in a bitstream according to a specific and non-limiting embodiment.

In this embodiment, a 2-stage process takes place during the overall recursive coding tree search for a given CU. For each CU considered during the coding tree search process, some split modes to be checked during the full rate distortion optimization are pre-selected in a step S503.

To do so a first "truncated" tree search stage S503 determines the RD cost associated with the splitting of the current CU, for all or a part of the split modes in treeTypeSet, but without allowing to further sub-divide the sub-CUs of current CU.

This truncated coding tree search results in a RD cost associated with each split mode for a current CU. Then, only a subset of N best split mode candidates found by the first stage are considered for the second full RD search that follows. N is an integer, typically equal to 2, 3 or 4. N is lower than the number of split modes in treeTypeSet.

The method thus provides an accelerated version of the method disclosed with respect to Figure 5, because the full recursive RD search is performed for a reduced number of split modes in each node of the coding tree.

Moreover, according to an embodiment, during the truncated first stage, the RD optimization of each sub-CU is performed with an unconstrainted set of coding parameters for these sub-CU. Then, during the second stage, the RD optimization of each sub-CU in NO_SPLIT mode is not repeated. Instead, the result from the first stage can be re-used. This method further limits the total amount of RD cost computations.

The method starts at step S500. At step S502, a transmitter 1000, e.g. such as the encoder 100, accesses a block of a picture, e.g. a CU.

At step S504, currTreeType is set to the first element of the treeTypeSet. At step S506, coding parameters for the current CU are determined by rate distortion optimization, the current CU being partitioned into sub-CUs according to currTreeType. In S506, the sub-CUs of the current CU are not further partitioned, i.e. the only split mode allowed for the sub-CUs is NO_SPLIT.
Step S506 outputs a RD cost RdCost_1[currTreeType] that is associated with the split mode currTreeType. At step S508, the method checks whether currTreeType is the last element of treeTypeSet. In the case where currTreeType is the last element of treeTypeSet, the method continues at step S512, otherwise the method continues at step S510 with a next element of treeTypeSet. At step S512, currTreeType is set to the first element of a partialTreeTypeSet which comprises the M split modes of treeTypeSet whose associated RD costs RdCost_1[currTreeType] are the lowest.
At step S514, a sub-coding tree is determined for current CU by rate distortion optimization using an unconstrained set of coding parameters. Step S514 outputs a RD cost RdCost_2[currTreeType] that is associated with the split mode currTreeType. At step S516, the method checks whether currTreeType is the last element of partialTreeTypeSet. In the case where currTreeType is the last element of partialTreeTypeSet, the method ends at step S520, otherwise the method continues at step S518 with a next element of partialTreeTypeSet. The method thus outputs for the current CU the best split mode which is the mode in partialTreeTypeSet associated with the lowest RdCost_2[currTreeType].
If a split mode different from NO_SPLIT is contained in the set partialTreeTypeSet, then the step S514 includes, for this candidate split mode, the division of the current CU into 2 or more sub-CUs. The process of figure 13 is then invoked in a recursive way successively with each sub-CU of the current CU as input.
If the split mode NO_SPLIT is contained in the set partialTreeTypeSet, then the step S514 includes, for this NO_SPLIT mode, a rate distortion optimization of the coding parameters associated with the current CU. Furthermore, if the NO_SPLIT mode is the best split mode for the current CU, that it to say the split mode in the set partialTreeTypeSet with minimal rate distortion cost RdCost_2, then the optimal coding parameters found for the current CU are stored and represent the final coding parameters that are used to encode the current CU.

According to a specific embodiment, only a subset of split modes undergoes the two-stages coding tree search. The other split mode candidates systematically undergo the one-stage coding tree search of figure 5.
For instance, the split modes that undergo the two-stage process may be the asymmetric split modes (HOR_TOP, HOR_DOW, VER_LEFT, VER_RIGHT), in order to only perform the full RD search for a subset of these asymmetric split modes.

According to another embodiment, the two-stage coding tree search of Figure 13 only takes place at some depth levels. For instance, it may take place only for low depth levels.

In a variant, the 2-stage coding tree search of Figure 13 only takes place for some block sizes. For instance, it may take place only for blocks of large size.

It is to be understood that the figures and descriptions have been simplified to illustrate elements that are relevant for a clear understanding of the present embodiments, while eliminating, for purposes of clarity, many other elements found in typical encoding and/or decoding devices. It will be understood that, although the terms first and second may be used herein to describe various elements, these elements should not be limited by these terms. These terms are only used to distinguish one element from another. Various methods are described above, and each of the methods comprises one or more steps or actions for achieving the described method. Unless a specific order of steps or actions is required for proper operation of the method, the order and/or use of specific steps and/or actions may be modified or combined.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. An encoding method comprising:
- determining (S204, S304) a partitioning of a current block of a picture into sub-blocks in the form of a coding tree using a set of coding parameters, wherein at least one coding parameter of said set of coding parameters is set to a value belonging to a subset of all possible values;
- determining (S206, S306) values of the coding parameters of the set from said determining of a partitioning ; and
- encoding (S208, S308) said current block using the determined coding parameters.

2. The method of claim 1, wherein determining (S206) values of the coding parameters of the set from said determining a partitioning comprises determining values of the coding parameters of the set using the determined coding tree and wherein encoding (S208) said current block comprises encoding said current block using the determined coding tree and the determined coding parameters.

3. The method of claim 2, wherein determining values of the coding parameters of the set using said determined coding tree comprises using said determined coding tree only up to a determined depth level in the coding tree.

4. The method of claim 2, wherein determining values of the coding parameters of the set using said determined coding tree comprises using said determined coding tree down to a determined block size.

5. The method of claim 2, wherein said at least one coding parameter of said set of coding parameters is set to a value belonging to a subset of all possible values only up to a determined depth level in the coding tree.

6. The method of claim 2, wherein said at least one coding parameter of said set of coding parameters is set to a value belonging to a subset of all possible values only down to a determined block size.

7. The method of claim 2, wherein said at least one coding parameter of said set of coding parameters is set to a value belonging to a subset of all possible values only from a determined depth level in the coding tree up to a higher depth level.

8. The method of claim 2, wherein said at least one coding parameter of said set of coding parameters is set to a value belonging to a subset of all possible values only from a determined block size down to a smaller block size.

9. The method according to claim 1, wherein determining a partitioning of a current block into sub-blocks in the form of a coding tree using a set coding parameters comprises estimating a rate distortion cost per split mode for each sub-block in the coding tree and storing, for each sub-block, M split modes whose associated rate distortion costs are the lowest, M being an integer.

10. The method of claim 9, wherein determining (S306) values of the coding parameters of the set from said determining a partitioning comprises determining values of the coding parameters of the set and further a new coding tree using the stored M split modes for each sub-block and wherein encoding (S308) said current block comprises encoding said current block using the new coding tree and the determined coding parameters.

11. The method of claim 10, wherein M is a function of a depth level of said sub-block in the coding tree or of a size of said sub-block.

12. An encoding apparatus comprising:
- means for determining a partitioning of a current block of a picture into sub-blocks in the form of a coding tree using a set of coding parameters, wherein at least one coding parameter of said set of coding parameters is set to a value belonging to a subset of all possible values;
- means for determining values of the coding parameters of the set from said determining of a partitioning; and
- means for encoding said current block using the determined coding parameters.

13. The apparatus of claim 12, wherein determining (S206) values of the coding parameters of the set from said determining a partitioning comprises determining values of the coding parameters of the set using the determined coding tree and wherein encoding (S208) said current block comprises encoding said current block using the determined coding tree and the determined coding parameters.

14. The apparatus according to claim 12, wherein determining a partitioning of a current block into sub-blocks in the form of a coding tree using a set coding parameters comprises estimating a rate distortion cost per split mode for each sub-block in the coding tree and storing, for each sub-block, M split modes whose associated rate distortion costs are the lowest, M being an integer.
